# FASCICULE DE BREVET EUROPEEN

(11) **EP 1 310 341 B1**
(45) Date de publication et mention de la délivrance du brevet: **16.02.2005**
(21) Numéro de dépôt: 02352020.8
(22) Date de dépôt: 08.10.2002
(51) Int. Cl.: B29B 17/02, B29B 17/00, C08J 11/08, B26D 1/00, B02C 4/02

(54) **Procédé et installation de récupération des constituants d'un pneumatique hors d'usage**
Verfahren und Vorrichtung zur Wiedergewinnung von den Komponenten eines Altreifens
Process and apparatus for recovering the components of a used tyre

(30) Priorité: 09.10.2001 FR 0112945
(43) Date de publication de la demande: 14.05.2003
(73) Titulaire: Meric, Francois, 09200 Saint-Girons (FR)
(72) Inventeur: Meric, Francois, 09200 Saint-Girons (FR)
(74) Mandataire: Ravina, Bernard

(56) Documents cités:
- WO-A-94/07670
- WO-A-99/01266
- DE-A- 2 702 177
- FR-A- 2 785 220
- FR-A- 2 798 089
- US-A- 5 304 576
- US-A- 5 316 224

## Description

La présente invention a pour objet un procédé et une installation de récupération des constituants d'un pneumatique usagé, à savoir le métal de la bande de roulement et des flancs et le caoutchouc, en vue d'une réutilisation ultérieure.

Le procédé selon la présente invention se caractérise essentiellement en ce qu'il consiste :
- à abraser la bande de roulement du pneumatique afin de mettre à nu la partie métallique de cette dernière,
- à découper les talons et flancs du pneumatique en sorte de les séparer de la bande de roulement,
- à soumettre les différentes parties du pneumatique à l'action d'un solvant liquide et ce pendant un temps suffisant pour obtenir un ramollissement du caoutchouc,
- à étirer les différentes parties du pneumatique par action mécanique d'étirement tangentiel sur deux de ses grandes faces opposées en sorte de désolidariser le métal du caoutchouc ou d'extraire le métal du caoutchouc..

Selon une autre caractéristique, le procédé consiste , après la phase d'étirement tangentiel, à trier les différents constituants

Selon une autre caractéristique du procédé selon l'invention, la phase de trempage dans le solvant est combinée à une agitation mécanique des parties du pneumatique dans le solvant et à soumettre lesdites parties à des chocs répétés.

Selon encore une autre caractéristique du procédé selon l'invention, le solvant est maintenu à une température de 30 à 40 degré Celsius.

Selon une autre caractéristique du procédé selon l'invention, le solvant est constitué par du trichloréthylène.

La présente invention a également pour objet une installation de récupération des constituants d'un pneumatique hors d'usage.

Cette installation se caractérise essentiellement en ce qu'elle comporte en combinaison, une unité d'abrasion de la bande de roulement du pneumatique et de séparation par découpage des talons et des flancs du pneumatique, une enceinte avec fermeture étanche dans laquelle sont disposés le solvant et parties du pneumatique à traiter, une unité d'étirement tangentiel des parties de pneumatique et un trieur magnétique apte à séparer les parties métalliques du caoutchouc.

D'autres buts, avantages et caractéristiques de l'installation selon l'invention apparaîtront à la lecture de la description d'une forme préférée de réalisation, donnée à titre non limitatif en se référant aux figures jointes en lesquelles :

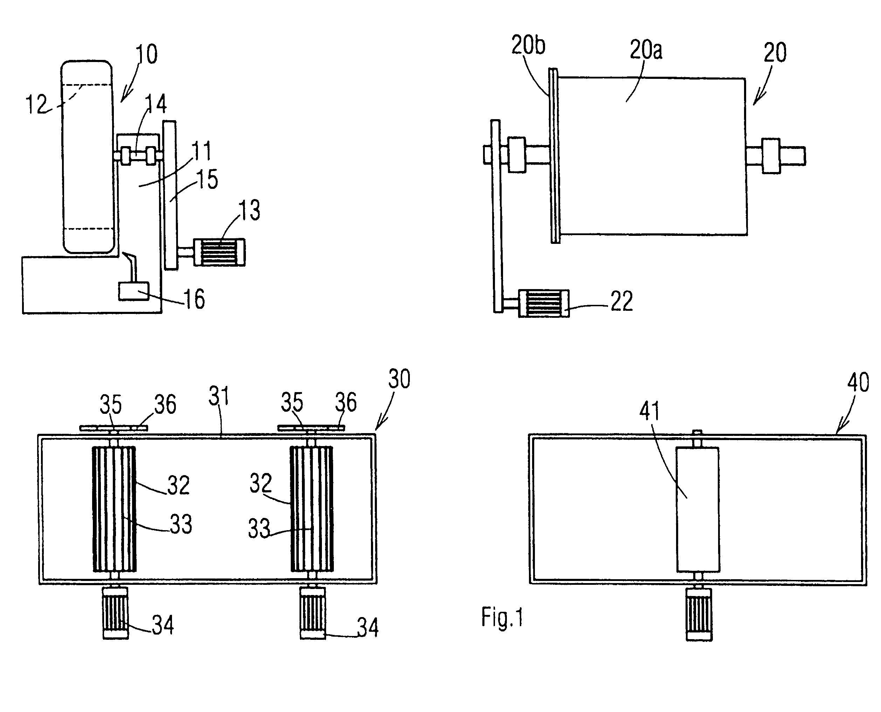

- la figure 1 est une vue schématique d'une installation selon l'invention,

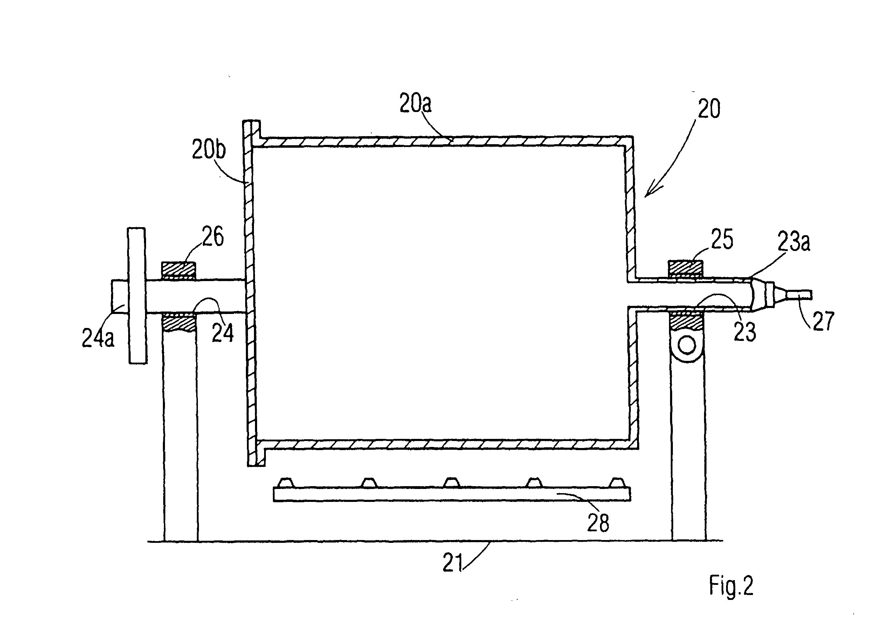

- la figure 2 est une vue en coupe de l'enceinte de traitement thermique,

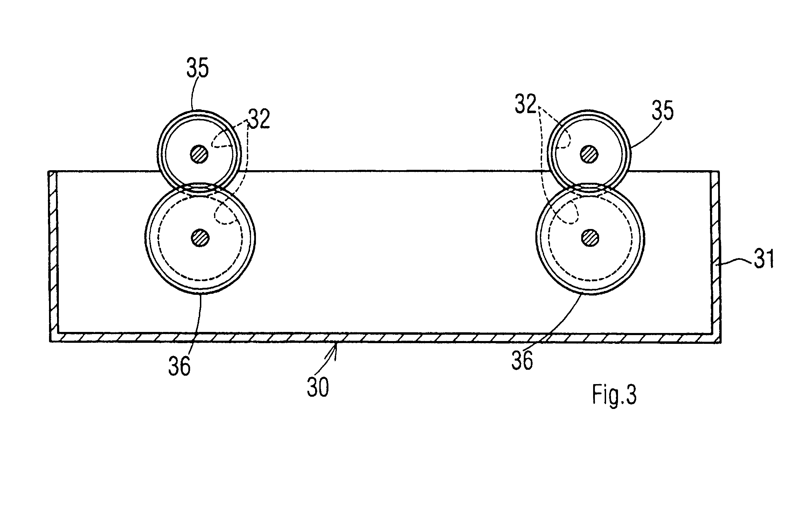

- la figure 3 est une vue en coupe de l'unité de désolidarisation des constituants du pneumatique.

Telle que représentée, l'installation selon l'invention comprend une unité 10 d'abrasion de la bande de roulement et de découpage des talons et des flancs du pneumatique hors d'usage, une enceinte 20 obturable de manière étanche par une porte dans laquelle sont introduits le solvant qui peut être du trichloréthylène, et les parties du pneu dont les constituants doivent être séparés, une unité 30 de désolidarisation des constituants les uns des autres (caoutchouc et métal) des parties des pneumatiques et une unité 40 de triage apte à séparer le métal du caoutchouc.

Selon la forme préférée de réalisation, l'unité 10 d'abrasion et découpage des flancs et talons comprend un bâti 11 sur lequel est monté un tambour 12 rotatif entraîné en rotation selon un axe horizontal par un organe moteur 13, par exemple un moteur électrique.

Le tambour rotatif 12 est accouplé par tous moyens connus, et ce de manière amovible à un arbre 14 monté en rotation dans des paliers du bâti 11.

Cet arbre 14 est lui-même accouplé à l'arbre de sortie de l'organe moteur 13 soit directement, soit par l'intermédiaire d'une transmission de mouvement 15 de tout type connu.

Face au tambour 12, l'unité d'abrasion et de découpage est pourvue d'un équipage 16 porte outil d'abrasion et/ou de coupe, mobile dans des glissières du bâti 11 selon un axe horizontal parallèle à l'axe de rotation du tambour 12. Le mouvement de l'équipage porte outil pourra être motorisé ou assuré par un système vis et écrou, actionné manuellement par l'opérateur.

L'équipage 16 porte outil pourra aussi être déplaçable le long d'un axe vertical perpendiculaire à l'axe de rotation du tambour 15.

L'abrasion de la bande de roulement pourra être effectuée par passes successives selon un mouvement alternatif d'un outil d'abrasion sous forme d'un outil de coupe du genre outil de tournage. La coupe des talons et des flancs sera également effectuée à l'aide d'outil de coupe du genre outil de tournage par exemple. Cet outil sera refroidi par un jet d'eau ou par tout autre liquide de refroidissement approprié.

Le tambour 12 pourra être constitué par une jante de roue.

L'unité 20 de traitement chimique comprend un bâti 21 sur lequel est montée une enceinte 20a, se présentant sous la forme d'une cuve cylindrique par exemple, avec couvercle d'obturation 20b. Cette enceinte 20a est entraînée en rotation selon son axe longitudinal de symétrie par un organe moteur 22 et est pourvue selon son axe longitudinal de deux portées de guidage 23, 24, engagées en rotation dans deux paliers 25, 26, solidaires du bâti 21.

Selon la forme préférée de réalisation, l'enceinte 20a comprend respectivement en saillie sur sa paroi de fond et sur la paroi opposée un premier tourillon 23a sur lequel est pratiquée la portée 23, et un second tourillon 24a sur lequel est pratiquée la portée 24, ledit tourillon étant pourvu selon son axe longitudinal de symétrie d'un canal de vidange de l'enceinte 20a, ledit canal débouchant dans ladite enceinte et ledit tourillon extérieurement à ladite enceinte étant pourvu d'une vanne 27 d'obturation ou d'ouverture du canal.

La vanne 27 pourra être à commande électrique ou à commande manuelle.

Selon la forme préférée de réalisation, l'un des tourillons, préférentiellement le tourillon 24a, reçoit de l'ensemble moteur 22 un couple d'entraînement en rotation.

Cet ensemble moteur pourra être constitué par un moteur électrique et par une transmission de mouvement connue en soi par exemple du type à courroies et poulies. L'une des poulies sera fixée sur l'arbre de sortie du moteur tandis que l'autre sera fixée sur le tourillon 24a. La courroie sera tendue entre ces deux poulies. Tout autre transmission de mouvement pourra être utilisée.

L'ouverture de chargement de l'enceinte pourra être formée dans la paroi enveloppe de l'enceinte, mais l'ouverture pourra être formée en extrémité de l'enceinte à l'opposée de la paroi de fond. Selon cette forme de réalisation, le tourillon 24a et fixé sur le couvercle 20b.

Préférentiellement, le palier 25 est disposé dans un boîtard articulé selon un axe horizontal à un support vertical du bâti 21 et le palier 26 du tourillon 24a est pratiqué dans un boîtard monté de manière amovible dans un second support vertical du bâti 21 de façon que la cuve d'une position d'utilisation, inclinée par rapport à la verticale, puisse être disposée selon une position verticale de vidange.

A l'enceinte 20a pourra être associé un moyen de chauffage du solvant qu'elle contient, ce solvant étant par exemple du trichloréthylène. La température du solvant pourra se situer entre 30 et 40.degrés Celsius. Le chauffage du solvant a pour effet de renforcer sa capacité à attaquer chimiquement les parties du pneumatique plongées dans le bain de solvant. Cette action chimique peut être complétée par une action mécanique.

Ainsi dans l'enceinte 20a pourra être introduit au moins un bloc métallique, libre de se déplacer dans et par rapport à cette dernière lorsqu'elle est entraînée en rotation. Les chocs de ces blocs métalliques sur les parties de pneumatiques ont pour but aussi de faciliter la pénétration du solvant entre le caoutchouc et le métal. Les blocs métalliques pourront se présenter sous la forme de parallélépipède rectangle. Toute autre forme adaptée pourra être utilisée. On pourra prévoir aussi un plusieurs agitateurs installés fixement dans l'enceinte et pouvant prendre la forme de bras radiaux, de cadre radiaux et autres.

Tout type de moyen de chauffage pourra être utilisé. On pourra par exemple utiliser un moyen de chauffage à la flamme comportant une rampe avec buse connectée par une conduite appropriée à une réserve de gaz inflammable, sous pression du butane. Les flammes formées viendront au contact de la surface cylindrique de l'enceinte 20a.

L'unité 30 de désolidarisation des constituants (métal et caoutchouc) comprend un bac 31 dans lequel est montée au moins une paire de rouleaux presseurs 32, parallèles, définissant un intervalle de pincement et d'étirement, lesdits rouleaux étant entraînés en rotation par un ensemble moteur en sens inverse l'un de l'autre selon des vitesses de rotation différentes en valeurs absolues. Préférentiellement, les rouleaux présentent sur leurs surfaces cylindriques des reliefs 33 saillant pour accroître leurs capacités d'entraînement et de préhension des différentes parties de pneumatiques.

L'ensemble moteur pourra être constitué par un moteur électrique 34 accouplé à l'arbre d'entraînement de l'un des rouleaux et par une transmission de mouvement de ce dernier rouleau à l'autre, constituée par un premier pignon denté 35 fixé au tourillon de l'un des rouleaux et un second pignon denté 36 engrainé avec le précédent et fixé au tourillon de l'autre. Ces deux pignons seront de diamètres différents et comporteront des nombres de dents différents.

L'unité de triage 40 sera constituée essentiellement par un trieur magnétique sous forme d'un rouleau 41 entraîné en rotation par un organe moteur 42 du type électrique, apte à attirer les parties métalliques.

## Revendications

1. Procédé de traitement de pneumatiques hors d'usage en vue de la séparation les uns des autres des constituants dudit pneumatique, à savoir le métal et le caoutchouc et leur récupération **caractérisé en ce qu'**il consiste :
- à abraser la bande de roulement du pneumatique afin de mettre à nu la partie métallique de cette dernière,
- à découper les talons et flancs du pneumatique afin de les séparer de la bande de roulement,
- à soumettre les différentes parties du pneumatique à l'action d'un solvant liquide et ce pendant un temps suffisant pour obtenir un ramollissement du caoutchouc,
- à étirer les différentes parties du pneumatique par action mécanique d'étirement tangentiel sur deux de leurs grandes faces opposées en sorte de désolidariser le métal du caoutchouc ou d'extraire le métal du caoutchouc.

2. Procédé selon la revendication 1 **caractérisé en ce qu'**il consiste également, après la phase d'étirement tangentiel, à trier les différents constituants.

3. Procédé selon la revendication 1 ou la revendication 2, **caractérisé en ce qu'**il consiste à agiter mécaniquement les parties du pneumatique dans le solvant pour renforcer l'action de ce dernier, et à soumettre lesdites parties à des chocs répétés.

4. Procédé selon l'une quelconque des revendications précédentes, **caractérisé en ce que** le solvant est maintenu à une température de 30 à 40 degrés Celsius.

5. Procédé selon l'une quelconque des revendications précédentes, **caractérisé en ce que** le solvant utilisé est du trichloréthylène.

6. Installation de traitement des pneumatiques hors d'usage en vue de la séparation les uns des autres des constituants des pneumatiques hors d'usage, à savoir le métal et le caoutchouc et leur récupération, **caractérisée en ce qu'**elle comprend une unité (10) d'abrasion de la bande de roulement du pneumatique et de séparation, par découpage des talons et des flancs du pneumatique, une enceinte (20) avec fermeture étanche dans laquelle sont introduits le solvant et les parties du pneumatique dont les parties doivent être séparées, et une unité (30) de désolidarisation des constituants (caoutchouc et métal) des parties de pneumatiques.

7. Installation selon la revendication 6, **caractérisée en ce qu'**elle est dotée d'une unité (40) de triage apte à séparer le métal du caoutchouc.

8. Installation selon la revendication 6 ou la revendication 7, caractérisée en que l'unité d'abrasion et de découpage comprend un bâti (11) sur lequel est monté un tambour (12) rotatif entraîné en rotation selon un axe horizontal par un organe moteur (13), ladite unité (10) comprenant sur le bâti, face au tambour (12) d'un équipage (16) porte outil pour l'abrasion et la coupe, mobile dans des glissières du bâti selon un axe horizontal, parallèle à l'axe de rotation du tambour (11).

9. Installation selon l'une quelconque des revendications 6 à 8, **caractérisée en ce que** l'unité (20) de traitement chimique des parties découpées du pneumatique comprend une enceinte (20a) entraînée en rotation selon son axe longitudinal de symétrie par un ensemble moteur (22), et est pourvue selon son axe longitudinal de deux portées de guidage (23, 24) engagées en rotation dans deux paliers (25, 26) solidaires du bâti (21) de ladite unité (20).

10. Installation selon la revendication 9, **caractérisée en ce que** l'enceinte (20a) de l'unité de traitement chimique (20) comprend respectivement en saillie sur sa paroi de fond et sur la paroi opposée un premier tourillon (23a) sur lequel est pratiquée la portée (23), et un second tourillon (24a) sur lequel est pratiquée la portée (24), ledit tourillon étant pourvu selon son axe longitudinal de symétrie d'un canal de vidange de l'enceinte (20a), ledit canal débouchant dans ladite enceinte et ledit tourillon extérieurement à ladite enceinte étant pourvu d'une vanne (27) d'obturation ou d'ouverture du canal.

11. Installation selon la revendication 10, **caractérisée en ce que** le palier (25) est disposé dans un boitard articulé selon un axe horizontal à un support vertical du bâti (21), et que le palier (26) du tourillon (24a) est pratiqué dans un boîtard monté de manière amovible dans un second support vertical du bâti (21) de façon que la cuve d'une position d'utilisation, inclinée par rapport à la verticale, puisse être disposée selon une position verticale de vidange.

12. Installation selon l'une quelconque des revendications 9 à 11, **caractérisée par** un moyen de chauffage (28) du solvant contenu dans l'enceinte.

13. Installation selon l'une quelconque des revendications 6 à 12, **caractérisée en ce que** l'unité (30) de désolidarisation des constituants (métal et caoutchouc) des différentes parties des pneumatiques comprend au moins une paire de rouleaux presseurs (32) parallèles définissant un intervalle de pincement et d'étirement, lesdits rouleaux étant entraînés en rotation par un ensemble moteur, en sens inverse l'un de l'autre selon des vitesses de rotation différentes en valeurs absolues, lesdits rouleaux présentant sur leurs surfaces cylindriques des reliefs (33) en saillie.

## Patentansprüche

1. Verfahren zur Behandlung von abgenutzten Reifen zur Trennung der Bestandteile des Reifens voneinander, nämlich des Metalls und des Gummis, und zu ihrer Rückgewinnung, **dadurch gekennzeichnet, daß** es besteht aus:
- Abtragen der Lauffläche des Reifens, um ihren Metallteil freizulegen,
- Schneiden der Wülste und Flanken des Reifens, um sie Reifenlauffläche zu trennen,
- die verschiedenen Teile des Reifens werden der Wirkung eines flüssigen Lösungsmittels während einer genügenden Zeit unterworfen, um eine Erweichung des Gummis zu erhalten,
- die verschiedenen Teile des Reifens werden durch tangentiales Ziehen an zwei ihrer gegenüberliegenden großen Flächen gezogen, um das Metall vom Gummi zu befreien oder das Metall aus Gummi herauszuziehen.

2. Verfahren nach Anspruch 1, **dadurch gekennzeichnet, daß** es auch darin besteht, die verschiedenen Bestandteile nach der Phase des tangentialen Ziehens zu sortieren (separieren).

3. Verfahren nach Anspruch 1 oder Anspruch 2, **dadurch gekennzeichnet, daß** die Teile des Reifens im Lösungsmittel mechanisch bewegt werden, um die Wirkung des Lösungsmittels zu verstärken, und die Teile wiederholten Stößen und Schlägen ausgesetzt werden.

4. Verfahren nach einem der vorangehenden Ansprüche, **dadurch gekennzeichnet, daß** das Lösungsmittel bei einer Temperatur von 30° bis 40° C gehalten wird.

5. Verfahren nach einem der vorangehenden Ansprüche, **dadurch gekennzeichnet, daß** das verwendete Lösungsmittel Trichlorethylen ist.

6. Einrichtung zur Behandlung von abgenutzten Reifen im Hinblick auf die Trennung der Bestandteile der abgenutzten Reifen voneinander, nämlich des Metalls und des Gummis, und ihre Rückgewinnung, **dadurch gekennzeichnet, daß** sie aufweist: eine Einheit (10) zum Abtragen der Reifenlauffläche und zum Trennen durch Zerschneiden der Wülste und Flanken des Reifens, eine Kammer (20) mit dichtem Verschluß, in welche das Lösungsmittel und die Teile des Reifens eingeführt werden, deren Teile getrennt werden sollen, und eine Einheit (30) zur Trennung der Bestandteile (Gummi und Metall) der Reifenteile voneinander.

7. Einrichtung nach Anspruch 6, **dadurch gekennzeichnet, daß** sie mit einer Klassiereinheit (40) versehen ist, die zum Trennen des Metalls vom Gummi geeignet ist.

8. Einrichtung nach Anspruch 6 oder Anspruch 7, **dadurch gekennzeichnet, daß** die Einheit zum Abtragen und Zerschneiden ein Gestell (11) aufweist, auf dem eine drehbare Trommel (12) montiert ist, die durch ein Antriebselement (13) gemäß einer horizontalen Achse gedreht wird, wobei die Einheit (10) auf dem Gestell gegenüber der Trommel (12) ein bewegtes Element (16) als Träger für ein Werkzeug zum Abtragen und Schneiden aufweist, das in Gleitschienen des Gestells gemäß einer horizontalen Achse parallel zur Drehachse der Trommel (11) beweglich ist.

9. Einrichtung nach einem der Ansprüche 6 bis 8, **dadurch gekennzeichnet, daß** die Einheit (20) zur chemischen Behandlung der zerschnittenen Teile des Reifens eine Kammer (20a) aufweist, die gemäß ihrer Symmetrielängsachse durch eine Antriebsanordnung (22) angetrieben und gemäß ihrer Längsachse mit zwei führenden Stützflächen (23, 24) versehen ist, die drehend in zwei mit dem Gestell (21) der Einheit (20) verbundenen Lagern (25, 26) sitzen.

10. Einrichtung nach Anspruch 9, **dadurch gekennzeichnet, daß** die Kammer (20a) der Einheit zur chemischen Behandlung (20) jeweils an ihrer Bodenwand und ihrer gegenüberliegenden Wand vorspringend einen ersten Wellenzapfen (23a), auf dem die Stützfläche (23) ausgebildet ist, und einen zweiten Wellenzapfen (24a), auf dem die Stützfläche (24) ausgebildet ist, aufweist, wobei der (erste) Wellenzapfen längs seiner Symmetrielängsachse mit einem Kanal zum Entleeren der Kammer (20a) versehen ist, wobei der Kanal in der Kammer mündet und der Wellenzapfen außerhalb der Kammer mit einem Ventil (27) zum Verschließen oder Öffnen des Kanals versehen ist.

11. Einrichtung nach Anspruch 10, **dadurch gekennzeichnet, daß** das Lager (25) in einem gemäß einer horizontalen Achse an einem vertikalen Träger des Gestells (21) angelenkten Gehäuse angeordnet ist und daß das Lager (26) des Wellenzapfens (24a) in einem Gehäuse ausgebildet ist, das abnehmbar in einem zweiten vertikalen Träger des Gestells (21) montiert ist, so daß der Bottich aus einer bezüglich der vertikalen geneigten Gebrauchsstellung in eine vertikale Entleerungsstellung gebracht werden kann.

12. Einrichtung nach einem der Ansprüche 9 bis 11, **gekennzeichnet durch** ein Heizmittel (28) für das in der Kammer enthaltene Lösungsmittel,

13. Einrichtung nach einem der Ansprüche 6 bis 12, **dadurch gekennzeichnet, daß** die Einheit (30) zur Trennung der Bestandteile (Metall und Gummi) der verschiedenen Teile der Reifen voneinander mindestens ein Paar von parallelen Druckwalzen (32) aufweist, die einen Zwischenraum zum Einklemmen und Ziehen definieren, wobei die Walzen durch eine Antriebsanordnung in voneinander umgekehrter Richtung mit in absoluten Werten verschiedenen Umdrehungsgeschwindigkeiten angetrieben werden, wobei die Walzen an ihren zylindrischen Flächen vorspringende Reliefs (33) aufweisen.

## Claims

1. A method of processing used tyres with a view to separating the constituents of said tyre from each other, namely the metal and the rubber, and recovering them, **characterised in that** it comprises:
- abrading the tread of the tyre in order to bare the metallic part of the latter,
- cutting the beads and sidewalls of the tyre in order to separate them from the tread,
- subjecting the various parts of the tyre to the action of a liquid solvent, for sufficient time to obtain a softening of the rubber,
- stretching the various parts of the tyre by mechanical tangential stretching action on two of their opposite large faces so as to disconnect the metal from the rubber or to extract the metal from the rubber.

2. A method according to claim 1, **characterised in that** it also comprises, after the tangential stretching phase, of sorting the various constituents.

3. A method according to claim 1 or claim 2, **characterised in that** it comprises mechanically stirring the parts of the tyre in the solvent in order to reinforce the action of the latter, and subjecting said parts to repeated impacts.

4. A method according to any one of the preceding claims, **characterised in that** the solvent is maintained at a temperature of 30 to 40 degrees Celsius.

5. A method according to any one of the preceding claims, **characterised in that** the solvent used is trichlorethylene.

6. An installation for processing used tyres with a view to separating the constituents of the used tyres from each other, namely the metal and the rubber, and recovering them, **characterised in that** it comprises a unit (10) for abrading the tread of the tyre and separating, by cutting, the beads and tyres of the tyre, a chamber (20) with sealed closure into which the solvent and the parts of the tyre whose parts are to be separated are introduced, and a unit (30) for disconnecting the constituents (rubber and metal) of the tyre parts.

7. An installation according to claim 6, **characterised in that** it is provided with a sorting unit (40) able to separate the metal from the rubber.

8. An installation according to claim 6 or claim 7, **characterised in that** the abrasion and cutting unit comprises a frame (11) on which there is mounted a rotary drum (12) driven in rotation on a horizontal axis by a drive member (13), said unit (10) comprising, on the frame, facing the drum (12), a tool-holder apparatus (16) for the abrasion and cutting, able to move in runners on the frame along a horizontal axis, parallel to the axis of rotation of the drum (11).

9. An installation according to any one of claims 6 to 8, **characterised in that** the unit (20) for the chemical processing of the cut parts of the tyre comprises a chamber (20a) driven in rotation on its longitudinal axis of symmetry by a drive assembly (22), and is provided on its longitudinal axis with two guide surfaces (23, 24) rotationally engaged in two bearings (25, 26) fixed to the frame (21) of said unit (20).

10. An installation according to claim 9, **characterised in that** the chamber (20a) of the chemical treatment unit (20) comprises respectively, projecting on its bottom wall and on the opposite wall, a first journal (23a) on which the surface (23) is formed, and a second journal (24a) on which the surface (24) is formed, said journal being provided on its longitudinal axis of symmetry with a channel for draining the chamber (24a), said channel opening out in said chamber and said journal externally to said chamber being provided with a valve (27) for closing or opening the channel.

11. An installation according to claim 10, **characterised in that** the bearing (25) is disposed in a guide articulated on a horizontal axis on a vertical support of the frame (21), and **in that** the bearing (26) of the journal (24a) is formed in a guide mounted removably in a second vertical support of the frame (21) so that the vessel, in a position of use, inclined with respect to the vertical, can be disposed in a vertical draining position.

12. An installation according to any one of claims 9 to 11, **characterised by** a means (28) for heating the solvent contained in the chamber.

13. An installation according to any one of claims 6 to 12, **characterised in that** the unit (30) for disconnecting the constituents (metal and rubber) of the various parts of the tyres comprises at least one pair of parallel pressing rollers (32) defining a gripping and stretching gap, said rollers being driven in rotation by a drive assembly, in opposite directions to one another at different speeds of rotation in absolute values, said rollers having projecting reliefs (33) on their cylindrical surfaces.
